(19) **Europäisches Patentamt / European Patent Office / Office européen des brevets**

(11) **EP 2 569 643 B1**

(12) **EUROPEAN PATENT SPECIFICATION**

(45) Date of publication and mention
of the grant of the patent:
**08.07.2015 Bulletin 2015/28**

(51) Int Cl.:
**G01P 15/08** (2006.01)     **G01P 15/02** (2013.01)
**H01G 5/00** (2006.01)     **G01P 15/125** (2006.01)
**G01D 5/241** (2006.01)

(21) Application number: **10851507.3**

(22) Date of filing: **12.05.2010**

(86) International application number:
**PCT/US2010/034588**

(87) International publication number:
**WO 2011/142754 (17.11.2011 Gazette 2011/46)**

(54) **ACCELEROMETER**

BESCHLEUNIGUNGSMESSER

ACCÉLÉROMÈTRE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**20.03.2013 Bulletin 2013/12**

(73) Proprietor: **Hewlett-Packard Development
Company, L.P.
Houston, TX 77070 (US)**

(72) Inventors:
• **BICKNELL, Robert Newton
Corvallis, Oregon 97330-4239 (US)**

• **HOMEIJER, Brian D.
Corvallis, Oregon 97330-4239 (US)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(56) References cited:
**WO-A1-99/18443        JP-A- 8 233 855
JP-A- 2001 083 004      JP-A- 2004 028 869
US-A- 4 743 902         US-A1- 2008 178 674
US-B1- 6 530 275**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

Accelerometers are used to detect and measure acceleration undergone by structures, vehicles, as well as moving parts of larger assemblages. Acceleration measurements can be used as input into control systems which use the information to adjust or correct for dynamic conditions. Some examples of their application include skid detection and correction, impact detection for triggering protective responses (e.g. air bag deployment or restraint tightening in automobiles), and to provide feedback control in steering and suspension. In addition, detecting and measuring acceleration can play a role in vibration detection in seismography. As such, there is continued interest in developing devices that detect acceleration accurately and effectively.

BRIEF DESCRIPTION OF THE DRAWINGS

FIG. 1 is a schematic diagram of an accelerometer in accordance with an example of the present disclosure;
FIG. 2 is a circuit diagram illustrating cross-capacitances between electrodes in an accelerometer in accordance with another example;
FIG. 3 is simplified circuit representing one-half of an accelerometer detection circuit in accordance with an example of the present disclosure;
FIG. 4 is a graph showing the value of six capacitances as a function of proof mass displacement in an accelerometer in accordance with another example of the present disclosure;
FIG. 5 is a graph showing the derivative of the capacitance functions in FIG. 4;
FIG. 6 is a graph showing voltages of drive signals that can be applied to capacitances in an accelerometer in accordance with an example of the present disclosure; and
FIG. 7 is a graph showing voltages of drive signals modified in accordance with an example of the present disclosure.

DETAILED DESCRIPTION

Reference will now be made to certain examples, and specific language will be used herein to describe the same. In describing and claiming these examples, the following terminology will be used in accordance with the definitions set forth below.

It is to be noted that, as used in this specification and the appended claims, the singular forms "a," "an," and "the" include one or more of the thing referred to unless the context clearly dictates otherwise.

As used herein, a "drive signal" or "drive voltage" refers to an electrical signal applied directly or indirectly to capacitive elements in a capacitive accelerometer, by which acceleration undergone by the accelerometer can be ascertained based on the behavior of the capacitive elements. References to an amplitude or magnitude of a drive signal or drive voltage generally indicate a peak-to-peak amplitude, e.g. of a sinusoid or other AC signal, rather than a root-mean-square measure.

As used herein, a plurality of items, structural elements, compositional elements, and/or materials may be presented in a list for convenience. These lists should be construed as though each member of the list is individually identified as a separate and unique member.

Examples discussed herein set forth an accelerometer that provides particular operational characteristics. Accelerometers can be used to detect and measure acceleration undergone by a structure or vehicle or of a moving part of a structure or vehicle. One type of accelerometer is the capacitive accelerometer, in which accelerational forces are detected by their effect on the value of one or more capacitances. In particular, a capacitive accelerometer in accordance with the principles discussed herein comprises a proof mass connected to a structural support so that the proof mass is capable of displacement relative to the structural support and in a particular plane. Such displacement can occur when a force is applied to the structural support, causing it to accelerate relative to the proof mass due to the inertia of the proof mass. The resulting relative displacement between the proof mass and structural support changes the capacitances formed by electrodes disposed on these two elements.

The capacitive changes can be detected and measured by applying a drive signal to the capacitances so as to produce an output signal that varies with proof mass displacement. For example, two electrodes disposed on a proof mass and three electrodes disposed on a structural support constitute a six-element cross-capacitance. Patent document US2008/0178674 discloses an example of a signal to drive such a circuit wherein a plurality of sinusoidal AC voltages is applied to one set of electrodes.
The amplitude of the signal output by the circuit varies with the capacitances, where each of the capacitances varies according to proof mass displacement. By measuring the signal and using this relationship, changes in proof mass position can be measured, from which the forces imparted by acceleration of the structure can be ascertained.

It has been found that such signals can themselves impart a force on the proof mass. This feedback force enhances the difficulty in tracking a proof mass. For example, accurate acceleration detection in this situation calls for separating the measurement-induced force from the forces imparted on the proof mass due to external accelerations. An accelerometer according to the present disclosure eliminates measurement-induced forces imparted on the proof mass. In a more particular example, the accelerometer also maintains a null position output. In another particular example, the accelerometer maximizes output gain, i.e. the relationship between proof mass displacement and changes in output voltage.

A method of detecting acceleration using a capacitive accelerometer can comprise applying a drive voltage to electrodes situated on a proof mass in the accelerometer so as to produce an output signal that varies with displacement of the proof mass. In particular aspect, the drive voltage can include sinusoidal waveforms, or alternatively square waveforms. The amplitude for the drive voltage is specified so as to eliminate forces imparted to the proof mass by the drive voltage, and wherein the gain of the output signal is maximized. In a more particular example, the drive voltage is selected to maintain a null position output.

Turning to the FIGS., and in accordance with one example of the present disclosure, an accelerometer 100 comprises a proof mass 102 associated with or connected to a support structure 104 so that the proof mass is capable of displacement relative to the structural support and in a particular plane. In a specific example, the proof mass is positioned parallel to a stator electrode array 106, and is further capable of displacement in a direction parallel to the stator electrode array. The stator electrode array includes multiple stator electrodes 110. The proof mass can be connected to the support structure using a compliant material to allow movement of the proof mass in that plane. In one aspect, the material is also resilient and releases the kinetic energy of displacement, returning the proof mass toward a previous position. The stator electrode array can be disposed on the support structure in various configurations.

In this specific aspect, the surface of upon which each electrode array is disposed is a flat surface. A translator electrode array 108 is also disposed on a surface of the proof mass facing opposite the stator electrode array. In a particular aspect, the translator electrode array includes multiple translator electrodes 112.

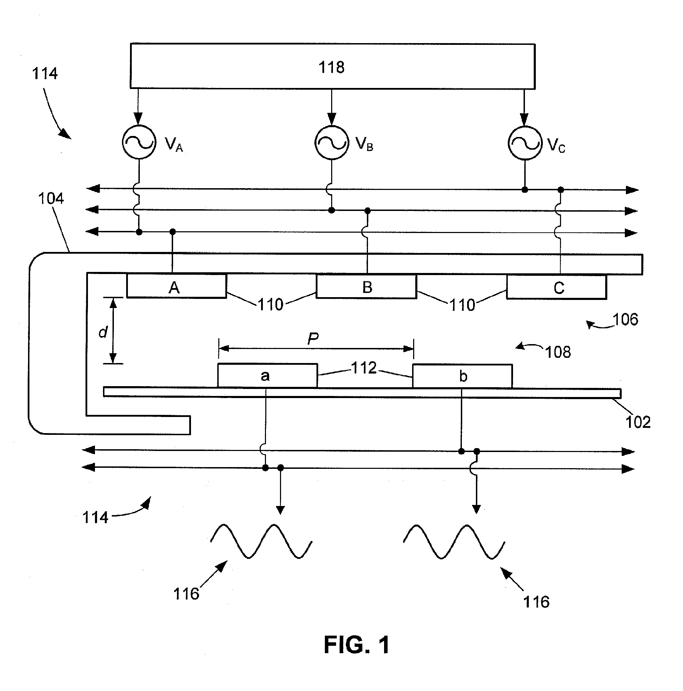

A uniform gap can exist between the stator electrode array 106 and the translator electrode array 108, the size of the gap denoted by distance d in FIG. 1. In a specific aspect, the gap may be from about 1 to about 3 micrometers. However, other distances can alternatively be used for $d$ in accordance with the principles of the present disclosure. The proof mass 102 can be situated in such a manner that the stator electrode array and the translator electrode array fall into planes that are parallel to one another, such that the gap is uniform throughout the entire overlap between the stator and translator electrode arrays.

Each individual electrode array comprises a plurality of electrodes. In particular, the stator electrode arrays 106 each comprises a plurality of stator electrodes 110 and the translator electrode arrays 108 comprises a plurality of translator electrodes 112. In a specific aspect, the translator electrode array can be smaller in size than the stator electrode array to account for the fact that the proof mass 102, and therefore the translator electrode array, are moveable. Accordingly, the arrays can be situated so that there is overlap between the stator and translator electrode arrays throughout the entire range of motion of the proof mass 102.

Each of the electrodes in an electrode array can comprise metal or other conductors. In a specific aspect, the electrodes can be generally rectangular in shape. However, it is understood that conductors of other shapes and sizes may be employed as desired in connection with the examples set forth or the principles described herein.

In addition to the gap d, each array has a total length L. In a particular example, a uniform spacing is used within each electrode array so that the array has a particular pitch P, i.e. the distance between a common point in each of the electrodes in a respective electrode array. It is noted that electrodes may be disposed in configurations other than in linear or rectangular arrays as depicted. For example, the electrodes may be disposed in a circular array for use in detecting angular acceleration and displacement, or other arrangements may also be used for particular applications.

For purposes of illustrating the principles discussed herein, the exemplary example is described with reference to a stator electrode array 106 and a translator electrode array 108. It is noted however that the same principles apply to examples in which there are actually multiple stator electrode arrays and multiple translator electrode arrays. For example, there may be four pairs of translator electrode arrays in which the proof mass moves in two dimensions within a plane that is parallel to the stator electrode array.

Furthermore, each array can include a plurality of electrode patterns, in which each pattern comprises two or more electrodes, and each electrode within each pattern corresponds with other electrodes in other patterns that occupy the same position in their respective patterns. The corresponding electrodes in each of the patterns are electrically coupled to each other. In addition, the patterns can be interdigitated with respect to each other within either array or both arrays.

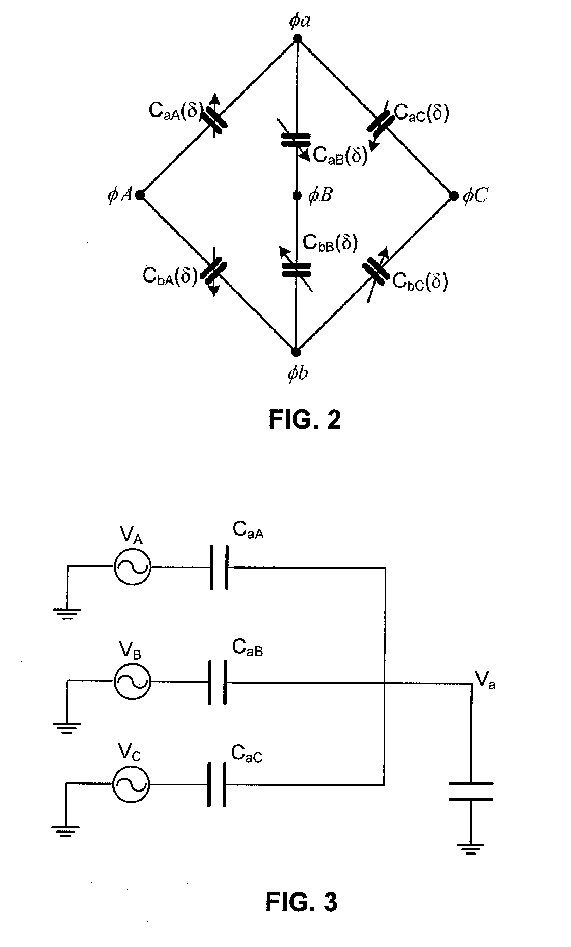

In accordance with an example, the accelerometer 100 further comprises drive circuitry 114 to provide connections among the components of the accelerometer and to facilitate driving the components for detection. Determination and delivery of drive voltages can be performed by a drive controller 118 included in the drive circuitry 114, and can be set up to detect or otherwise receive relevant specifications as input and adjust signal voltage accordingly. The circuitry provides connections among electrodes and within the circuitry corresponding pairs of electrodes form capacitances. For example, as shown in FIG. 1, stator electrodes 110 (A, B, and C) are electrically coupled and the translator electrodes 112 (a and b) are electrically coupled. The stator electrodes form a capacitance with the translator electrodes so as to form a total of six variable capacitances, $C_{aA}$, $C_{bA}$, $C_{aB}$, $C_{bB}$, $C_{aC}$, and $C_{bC}$. These capacitances constitute a six-element cross-capacitance, an equivalent circuit of which is shown in FIG. 2. These capacitances change as the translator electrode array 108 is displaced relative to the stator array 106.

The circuitry can also deliver a drive signal to the capacitances. In a particular aspect, the circuitry delivers the drive signal to one of the electrode arrays, generating an output that is affected by the value of the capacitances in the circuit. The drive signal used can include voltage waveforms that produce an output. It should be understood that terms used herein to describe voltage waveforms can refer to waveforms that deviate somewhat from a pure form. For example, sinusoidal voltages can also include voltages having quasi-sinusoidal waveforms.

In one example, the drive signal comprises a plurality of sinusoidal voltages. As such, the circuitry includes an AC voltage source, or alternatively a connection to such a source. In a particular aspect, the voltage source is connected via a capacitor so as to isolate the downstream circuitry from DC voltages. In another particular aspect, the frequency of the AC voltage source is specified so as to be higher than either a closed loop bandwidth or a system mechanical response. In an alternative example, the drive signal includes square wave voltages.

In a more particular example, and referring again to FIG. 1, the plurality of drive signals comprises a sinusoidal voltage delivered to the stator electrodes 110. A drive voltage $V_A$ is applied to stator electrode A, a drive voltage $V_B$ to stator electrode B, and a drive voltage $V_C$ to stator electrode C. Therefore each drive signal will encounter two capacitances, i.e. $V_A$ across capacitances $C_{aA}$, and $C_{bA}$; $V_B$ across $C_{aB}$ and $C_{bB}$; and $V_C$ across $C_{aC}$, and $C_{bC}$. In accordance with this example, two output signals 116 are generated, one detectable at each of the translator electrodes a and b. The two output signals are based upon the phase-to-phase capacitance between the stator electrode array 106 and the translator electrode array 108. In this example, the two signal outputs correspond to the two translator electrodes. That is, the cross-capacitance between the stator electrode array and the translator electrode array results in signals at the translator electrodes.

As the proof mass 102 moves relative to the support structure 104, the relative positions of the translator electrodes 112 and stator electrodes 110 changes in an angular fashion. The capacitance change function is specific to the specifications of the accelerometer, particularly the array pitch and length of the array or electrode pattern. For example, a ratio of the pitch of the translator electrode array 108 to the gap d between the arrays can be selected in order to obtain a particular change in the cross-capacitances per change in position (dC/dx). In a particular example, the ratio is specified to be equal to 1.6. In such a regime, the variation in the cross-capacitance is sinusoidal and may be adequately represented by a single component Fourier expansion with a period equal to the group length L. However, it is understood that other values may be employed for the ratio of the pitch of the translator electrode array to the gap d. The ratio of displacement D to array or pattern length L result in a position phase angle $\theta_P$ according to $\theta_P = 2\pi D/L$.

In a specific example of an accelerometer having a gap d=0.1 $\mu$m, the each of the capacitances changes in a quasi-sinusoidal fashion as a function of displacement phase angle $\theta_P$. The actual waveform can vary based on factors such as electrode shape and the physical characteristics of the coupling between the proof mass and the support structure.

The circuitry can be further employed to detect or sense the degree of the change in the capacitances between the electrode arrays 106 and 108 by measurement of the output signals 116. Based upon the change in the capacitances, such circuitry generates appropriate signals that are proportional to the acceleration experienced by the accelerometer. More specifically, an output signal of the embodied circuit can be an amplitude modulated version of the drive signal, where the amplitude is a function of the value of the respective capacitances. In another aspect, the output signal can further be demodulated to produce an output voltage that is proportional to the value of the capacitances and/or the amplitude of the output signal.

A plurality of signal outputs provides for tracking proof mass movement through multiple cycles of any one of the outputs signals 116. In a particular example, the pitches of the translator array 108 and the stator array 106 are selected so that the variation in output signals is distributed across the range of $\theta_P$ so each provides an independent measure of the displacement of the proof mass 102. More particularly, the ratio of the pitches is selected so that the maxima and minima of the output signals are uniformly distributed across the range of proof mass displacement. In a specific example the ratio of the pitch of the translator electrode array to that of the stator electrode array is about 1.5. In a particular aspect, where any one of the signal outputs approaches a zero slope (a negative or positive peak in the sinusoid), the slopes of the other two signal outputs will be either significantly negative or positive and therefore provide positional information. As a consequence, the movement of the proof mass 102 may be tracked across an entire cycle of any one of the outputs. Consequently, the accelerometer can track the movement of the proof mass at distances greater than a single cycle of variation of any one of the signal outputs or distances greater than the group length L.

As discussed above, the drive signal voltages can impart a force to the proof mass. The energy stored in a capacitor is given by:

$$U = \frac{1}{2}CV^2$$

[1]

The force on that capacitor is given by:

$$F = -\frac{1}{2}\frac{\partial C}{\partial x}V^2$$

[2]

The total force on the six capacitances of a three-phase accelerometer according to the present example is:

$$F = -\frac{1}{2}\left[V_A^2 C_1 + V_B^2 C_2 + V_C^2 C_3\right]$$

[3]

where

$$C_1 = \left(\frac{\partial C_{aA}}{\partial x} + \frac{\partial C_{bA}}{\partial x}\right)$$

$$C_2 = \left(\frac{\partial C_{aB}}{\partial x} + \frac{\partial C_{bB}}{\partial x}\right)$$

$$C_3 = \left(\frac{\partial C_{aC}}{\partial x} + \frac{\partial C_{bC}}{\partial x}\right)$$

In accordance with the present example, an accelerometer includes drive circuitry to deliver a plurality of sinusoidal drive voltages to the capacitances formed by the electrodes so that the total force exerted on the proof mass by the sinusoidal drive voltages is held constant at about zero. In a specific aspect, the drive circuitry delivers $V_A$, $V_B$, and Vc at values such that F in Eq. 3 resolves to about zero. In a particular example, the drive circuitry varies over the range of displacement so as to hold F constant at about zero.

A particular relative position of the proof mass 102 and the support structure 104 can designate a null point of the device. This can be done to facilitate calibration, or to facilitate tracking proof mass position. In one aspect, the null point is the point of zero displacement (i.e. $\theta_P = 0$). In another aspect, this is a position in which one electrode array (e.g. the stator electrode array 106) symmetrically overlies the other electrode array (e.g. the translator electrode array 108). In still another aspect, the cross-capacitances in the accelerometer (and the forces on them) are balanced at the null point. As such, a null point can be represented in the output signals and used to track the position of the proof mass. Forces imparted on the proof mass by the drive voltage signal can interfere with null position tracking.

In an example, drive voltages are employed that maintain null point voltage so that null tracking algorithms can be used. More particularly, the circuitry is configured so that a voltage differential between the at least two signal outputs is constant at zero when displacement of the proof mass is zero.

In FIG. 3 is shown a simplified diagram of one-half of the capacitive detection circuit in the present example, i.e. the capacitances formed using translator electrode a. The output voltage $V_a$ at electrode a is given by:

$$\begin{aligned} V_a &= (I_A + I_B + I_C)Z_{ref} \\ &= \left(\frac{V_A}{Z_{aA} + Zref} + \frac{V_B}{Z_{aB} + Zref} + \frac{V_C}{Z_{aC} + Zref}\right)Z_{ref} \\ &= \frac{V_A}{1 + \frac{Z_{aA}}{Z_{ref}}} + \frac{V_B}{1 + \frac{Z_{aB}}{Z_{ref}}} + \frac{V_C}{1 + \frac{Z_{aC}}{Z_{ref}}} \end{aligned}$$

[4]

where $Z_x$ is the complex impedance of the component denoted in the subscript. For capacitors, $Z = -j/\omega C$, so this can also be expressed as:

$$V_a = \left( \frac{V_A}{1 + \frac{C_{ref}}{C_{aA}}} + \frac{V_B}{1 + \frac{C_{ref}}{C_{aB}}} + \frac{V_C}{1 + \frac{C_{ref}}{C_{aC}}} \right) \qquad [5]$$

An equivalent circuit for the other half will have an output voltage $V_b$ that can be expressed similarly but with capacitances $C_{bA}$, $C_{bB}$, and $C_{bC}$.

$$V_b = \left( \frac{V_A}{1 + \frac{C_{ref}}{C_{bA}}} + \frac{V_B}{1 + \frac{C_{ref}}{C_{bB}}} + \frac{V_C}{1 + \frac{C_{ref}}{C_{bC}}} \right) \qquad [6]$$

Therefore, the differential voltage between outputs is $V_o = V_a - V_b$ According to the example, the drive circuitry delivers drive signals where voltages $V_A$, $V_B$, and Vc produce output signals so that $V_a - V_b$ is at about zero at the null point. As a result, null tracking functionality is preserved. In addition, a particular range of differential output that is symmetric about the null point is preserved. In this way, amplifiers or other components can be selected for use at the output stage that have a functional range that is well-matched to the output range. Preservation of the null output point allows the use of such amplifiers while reducing the possibility of saturation due to range mismatch.

According to another example, the accelerometer is configured so that an output gain is maximized. An output gain can generally be the strength of the effect of displacement on an aspect of accelerometer output. In a particular example, the output gain G is the rate of change in $V_o$ with changing displacement x, i.e.

$$G = \frac{\partial V_o}{\partial x} \qquad [7]$$

In terms of the drive voltages $V_A$, $V_B$, and $V_C$, gain G can be expressed as

$$
\begin{aligned}
= \ & V_A \left[ \frac{C_{cref}\left(\frac{\partial C_{aA}}{\partial x}\right)}{C_{aA}^2 \left(1 + \frac{C_{ref}}{C_{aA}}\right)^2} - \frac{C_{cref}\left(\frac{\partial C_{bA}}{\partial x}\right)}{C_{bA}^2 \left(1 + \frac{C_{ref}}{C_{bA}}\right)^2} \right] \\
+ \ & V_B \left[ \frac{C_{cref}\left(\frac{\partial C_{aB}}{\partial x}\right)}{C_{aB}^2 \left(1 + \frac{C_{ref}}{C_{aB}}\right)^2} - \frac{C_{cref}\left(\frac{\partial C_{aB}}{\partial x}\right)}{C_{bB}^2 \left(1 + \frac{C_{ref}}{C_{bB}}\right)^2} \right] \\
+ \ & V_C \left[ \frac{C_{cref}\left(\frac{\partial C_{aC}}{\partial x}\right)}{C_{aC}^2 \left(1 + \frac{C_{ref}}{C_{aC}}\right)^2} - \frac{C_{cref}\left(\frac{\partial C_{aC}}{\partial x}\right)}{C_{bC}^2 \left(1 + \frac{C_{ref}}{C_{bC}}\right)^2} \right] \qquad [8]
\end{aligned}
$$

In a particular example, the drive circuitry delivers drive signals so that output gain is maximized. In a more particular example, the drive voltages $V_A$, $V_B$, and $V_C$ are chosen so that the value of a function of G based on $V_A$, $V_B$, and $V_C$ is held at or near a maximum of that function.

As discussed above, a capacitive accelerometer in accordance with the examples herein utilizes drive signals having voltages selected to provide certain operating conditions. In particular, accelerometer drive signals are delivered to the detection capacitances, where the particular voltage of one or more of the signals is selected so that the total force imparted to the proof mass is about zero. In another example, the particular voltage(s) also maintains a null position in the accelerometer output. In still another example, the particular voltage(s) provide maximum gain of output voltage over proof mass displacement. These voltages are a function of accelerometer specifications, particularly the values of the capacitances formed by the electrodes. The drive signals are delivered to the capacitances by drive circuitry that provides the signals in the voltage range appropriate to the accelerometer specifications.

An example of a making an accelerometer in accordance with the principles herein comprises securing a stator electrode A, a stator electrode B, and a stator electrode C onto a support structure to form a stator electrode array 106 and securing a translator electrode a and a translator electrode b onto a proof mass 102 to form a translator electrode array 108. The proof mass is attached to the support structure so that the stator electrode array faces the translator electrode array, and so that the proof mass is capable of displacement in a direction parallel to the stator electrode array. The stator electrodes 110 and translator electrodes 112 are connected to a drive circuitry 114 in which the stator electrodes and the translator electrodes form capacitances $C_{aA}$, $C_{bA}$, $C_{aB}$, $C_{bB}$, $C_{aC}$, and $C_{bC}$. The drive circuitry can more particularly apply a set of drive voltages to the capacitances so as to generate at least two output signals 116, wherein the total force exerted on the proof mass by the drive voltages is held constant at about zero.

In one aspect, the particular drive signal voltages are a specification of the drive circuitry. Configuration of the drive circuitry will therefore be based on predetermined values for the relevant specifications. For example, a range for each of the capacitances may be determined based on factors such as electrode material, electrode size, electrode array dimensions, gap between the arrays, range of proof mass movement, and others recognized by skilled artisans as relevant in making such devices. The drive voltage appropriate for the desired operational conditions can then be engineered into the circuitry.

Alternatively, determination and delivery of drive voltages can be performed by a drive controller 118 included in the drive circuitry 114 and set up to detect or otherwise receive relevant specifications as input and adjust signal voltage accordingly. In one example, the drive controller is embodied in software or code that is executed by hardware such as a processor. In another example, the controller is embodied in dedicated hardware, such as discrete logic circuits having logic gates for implementing various logic functions upon an application of one or more data signals, application specific integrated circuits having appropriate logic gates, programmable gate arrays (PGA), field programmable gate arrays (FPGA), or other components.

More particularly, such software or code can be embodied in any computer-readable medium for use by or in connection with a processor or other execution system. The computer readable medium can comprise any one of many physical media such as, for example, electronic, magnetic, optical, electromagnetic, infrared, or semiconductor media. More specific examples of a suitable computer-readable medium would include, but are not limited to, magnetic tapes, magnetic floppy diskettes, magnetic hard drives, or compact discs. Also, the computer-readable medium can be a random access memory (RAM) including, for example, static random access memory (SRAM) and dynamic random access memory (DRAM), or magnetic random access memory (MRAM). In addition, the computer-readable medium may be a read-only memory (ROM), a programmable read-only memory (PROM), an erasable programmable read-only memory (EPROM), an electrically erasable programmable read-only memory (EEPROM), or other type of memory device.

The circuitry 114 can comprise further components as needed to impart desired characteristics to the behavior of the circuit according to the knowledge in the art. These can include, without limitation, demodulation components such as rectifiers and the like; components to provide DC isolation, such as additional capacitors; amplifiers, oscillators, signal generators, and the like.

Summarizing and reiterating to some extent, an accelerometer is described herein which allows measurement-related forces to be minimized or eliminated. The accelerometer can include capacitances driven by signals having particular voltages selected to provide said condition. The particular voltages can further maintain null position in an output of the accelerometer. The particular voltages can also maximize output gain.

EXAMPLES

Example 1

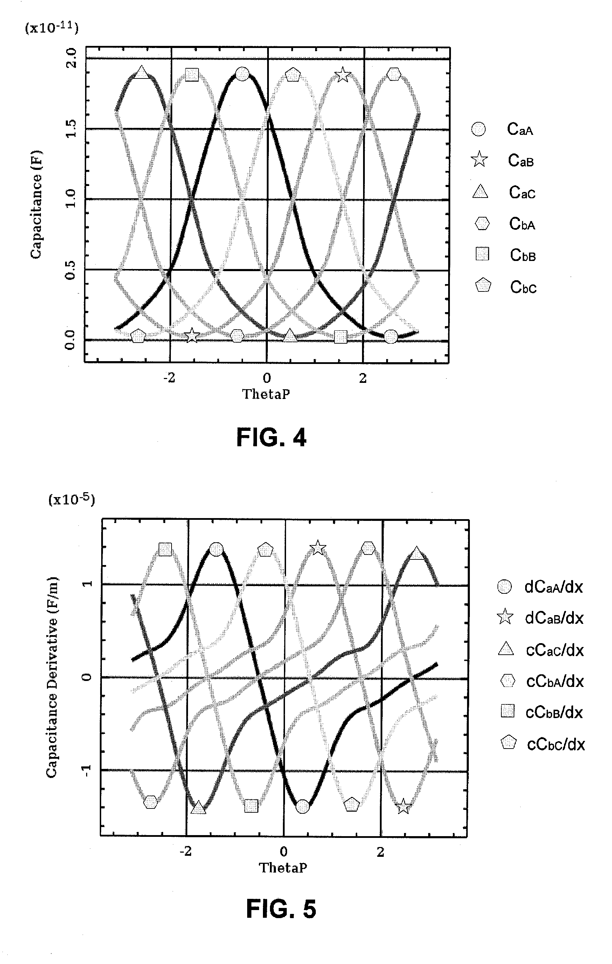

A three-phase accelerometer having a proof mass with translator electrodes a and b disposed thereupon and a support structure with stator electrodes A, B, and C disposed thereupon as shown in FIG. 1 and having a gap d of 0.1 $\mu$m has six capacitances $C_{aA}$, $C_{bA}$, $C_{aB}$, $C_{bB}$, $C_{aC}$, and $C_{bC}$ that vary with proof mass displacement $\theta_P$ as shown in FIG. 4. The derivative of each capacitance is shown in FIG. 5.

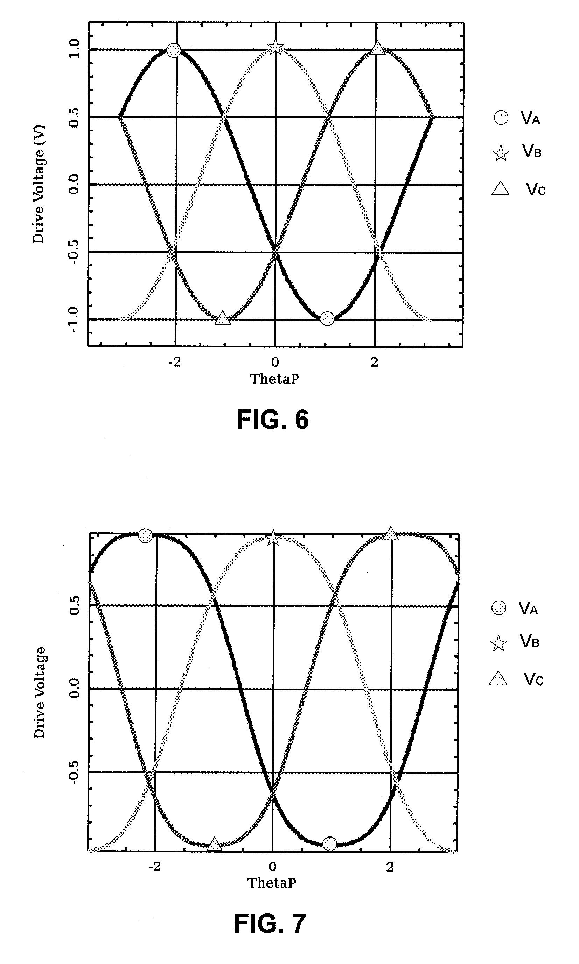

Drive signals having sinusoidal voltages $V_A$, $V_B$, and Vc are delivered to stator electrodes A, B, and C respectively and varied with $\theta_P$ as shown in FIG. 6. Output signals were recorded from translator electrodes a and b, both with the accelerometer at rest as well as under accelerations causing proof mass movement. Upon analysis of the output signals, a detectable component of variation in the output signal is found to be due to a nonzero force imparted to the proof mass by the drive signals.

Example 2

The drive signals used in Example 1 are delivered to the same stator electrodes as in Example 1, except the voltages are modified to vary with $\theta_P$ as shown in FIG. 7. Output signals were recorded from translator electrodes a and b, both with the accelerometer at rest as well as under accelerations causing proof mass movement. Upon analysis of the output signals, the proof mass is found to experience essentially no force arising from the modified drive signals.

Example 3

A three-phase accelerometer as in Example 1 is driven according to the method in Example 1. A null tracking algorithm is employed to track proof mass position based on a null position represented in the output signal and based on a proof mass starting position. The accelerometer is then subjected to a regime of acceleration trials. At the end of the trials regime, the null position of the output signal is compared to the original proof mass starting position. The null position is observed to correspond to a proof mass position other than the starting position.

Example 4

The three-phase accelerometer of Example 3 is subjected to the testing described in that Example, except while being driven using modified drive signals according to the method in Example 2. At the end of the trials regime, the null position of the output signal is compared to the original proof mass starting position. The null position is observed to correspond to the same proof mass starting position determined before the trials.

While the forgoing examples are illustrative of the principles and concepts discussed herein, it will be apparent to those of ordinary skill in the art that numerous modifications in form, usage and details of implementation can be made without the exercise of inventive faculty, and without departing from those principles and concepts. Accordingly, it is not intended that the principles and concepts be limited, except as by the claims set forth below.

**Claims**

**1.** An accelerometer (100), comprising:

a support structure (104) having situated thereon a stator electrode array (106) comprising stator electrode (A), stator electrode (B), and stator electrode (C);
a proof mass (102) positioned parallel to the stator electrode array and capable of displacement in a direction parallel to the stator electrode array, and having situated thereon a translator electrode array (108) facing the stator electrode array and comprising translator electrode a and translator electrode b, wherein the stator electrodes and the translator electrodes form capacitances $C_{aA}$, $C_{bA}$, $C_{aB}$, $C_{bB}$, $C_{ac}$, and $C_{bc}$; and
a drive circuitry (114) to apply a plurality of drive voltages to the capacitances so as to generate two output signals (116), wherein the total force F exerted on the proof mass (102) by the drive voltages is held constant at about zero,
wherein the drive circuitry (114) applies a drive voltage $V_A$ to capacitances $C_{aA}$ and $C_{bA}$, a drive voltage $V_B$ to capacitances $C_{aB}$ and $C_{bB}$, and a drive voltage $V_c$ to capacitances $C_{ac}$ and $C_{bc}$ so that

$$F = -\frac{1}{2}[V_A^2 C_1 + V_B^2 C_2 + V_C^2 C_3]$$

where

$$C_1 = \left(\frac{\partial C_{aA}}{\partial x} + \frac{\partial C_{bA}}{\partial x}\right)$$

$$C_2 = \left(\frac{\partial C_{aB}}{\partial x} + \frac{\partial C_{bB}}{\partial x}\right)$$

$$C_3 = \left(\frac{\partial C_{aC}}{\partial x} + \frac{\partial C_{bC}}{\partial x}\right)$$

and where x is the displacement of the proof mass (102) relative to the support structure (104).

**2.** The accelerometer of claim 1, wherein the drive circuitry applies the drive voltages to the capacitances so that a voltage differential between the two output signals (116) is constant at about zero when displacement of the proof mass (102) is zero.

**3.** The accelerometer of claim 1, wherein the drive circuitry (114) applies the drive voltages so as to maximize $\partial V_0/\partial x$, where $V_0$ is a voltage differential between the two output signals (116).

**4.** The accelerometer of claim 1, wherein a ratio of a pitch of the stator electrode array (106) to a pitch of the translator electrode array (108) is specified so that each of the two output signals (116) are sinusoidal.

**5.** The accelerometer of claim 1, wherein a ratio of a pitch of the stator electrode array (106) to a distance between the stator electrode array (106) and the translator electrode array (108) is specified so that maxima and minima of the two output signals (116) are uniformly distributed across a range of proof mass displacement.

**6.** The accelerometer of any of claims 1 through 5, wherein the drive voltage is a sinusoid wave.

**7.** The accelerometer of any of claims 1 through 5, wherein the drive voltage is a square wave.

**8.** The accelerometer of claim 1, wherein the drive circuitry (114) includes a drive controller (118) to control an amplitude of the drive voltages.

**9.** A method of detecting acceleration using a capacitive accelerometer, comprising:

applying a plurality of drive voltages to the capacitances $C_{aA}$, $C_{bA}$, $C_{aB}$, $C_{bB}$, $C_{ac}$, and $C_{bc}$ formed by stator electrodes on a support structure (104) and translator electrodes on a proof mass (102) so as to generate two output signals (116), wherein the total force F exerted on the proof mass (102) by the drive voltages is held constant at about zero,
wherein a drive voltage $V_A$ is applied to capacitances $C_{aA}$ and $C_{bA}$, a drive voltage $V_B$ is applied to capacitances $C_{aB}$ and $C_{bB}$, and a drive voltage $V_c$ is applied to capacitances $C_{ac}$ and $C_{bc}$ so that

$$F = -\frac{1}{2}[V_A^2 C_1 + V_B^2 C_2 + V_C^2 C_3]$$

where

$$C_1 = \left(\frac{\partial C_{aA}}{\partial x} + \frac{\partial C_{bA}}{\partial x}\right)$$

$$C_2 = \left(\frac{\partial C_{aB}}{\partial x} + \frac{\partial C_{bB}}{\partial x}\right)$$

$$C_3 = \left(\frac{\partial C_{aC}}{\partial x} + \frac{\partial C_{bC}}{\partial x}\right)$$

and where x is the displacement of the proof mass (102) relative to the support structure (114).

**10.** The method of claim 9, wherein the drive voltage is a sinusoid or a square wave.

**Patentansprüche**

**1.** Beschleunigungsmesser (100), der Folgendes umfasst:

eine Stützstruktur (104) mit einer darauf befindlichen Statorelektrodenanordnung (106), die eine Statorelektrode (A), eine Statorelektrode (B) und eine Statorelektrode (C) umfasst;

eine Prüfmasse (102), die parallel zur Statorelektrodenanordnung positioniert ist und in eine Richtung parallel zur Statorelektrodenanordnung verschoben werden kann, und die eine darauf befindliche Translatorelektrodenanordnung (108) aufweist, die der Statorelektrodenanordnung zugewandt ist und eine Translatorelektrode a und eine Translatorelektrode b umfasst, wobei die Statorelektroden und die Translatorelektroden Kapazitanzen $Ca_A$, $C_{bA}$, $C_{aB}$, $C_{bB}$, $C_{ac}$ und $C_{bc}$ bilden; und

eine Antriebsschaltung (114) zum Anlegen einer Vielzahl von Antriebsspannungen an die Kapazitanzen, um zwei Ausgangssignale (116) zu erzeugen, wobei die von den Antriebsspannungen auf die Prüfmasse (102) ausgeübte Gesamtkraft F konstant bei ungefähr Null gehalten wird,

wobei die Antriebsschaltung (114) eine Antriebsspannung $V_A$ an die Kapazitanzen $C_{aA}$ und $C_{bA}$, eine Antriebsspannung $V_B$ an die Kapazitanzen $C_{aB}$ und $C_{bB}$, und eine Antriebsspannung $V_C$ an die Kapazitanzen $C_{ac}$ und $C_{bc}$ anlegt, sodass

$$F = -\frac{1}{2}\left[V_A^2 C_1 + V_B^2 C_2 + V_C^2 C_3\right]$$

wobei

$$C_1 = \left(\frac{\partial C_{aA}}{\partial x} + \frac{\partial C_{bA}}{\partial x}\right)$$

$$C_2 = \left(\frac{\partial C_{aB}}{\partial x} + \frac{\partial C_{bB}}{\partial x}\right)$$

$$C_3 = \left(\frac{\partial C_{aC}}{\partial x} + \frac{\partial C_{bC}}{\partial x}\right)$$

und wobei x die Verschiebung der Prüfmasse (102) bezogen auf die Stützstruktur (104) ist.

2. Beschleunigungsmesser nach Anspruch 1, wobei die Antriebsschaltung die Antriebsspannungen derart an die Kapazitanzen anlegt, dass eine Spannungsdifferenz zwischen den zwei Ausgangssignalen (116) konstant ungefähr null beträgt, wenn die Verschiebung der Prüfmasse (102) null ist.

3. Beschleunigungsmesser nach Anspruch 1, wobei die Antriebsschaltung (114) die Antriebsspannungen derart anlegt, dass $\partial V_0/\partial \chi$ maximiert wird, wobei $V_0$ eine Spannungsdifferenz zwischen den zwei Ausgangssignalen (116) ist.

4. Beschleunigungsmesser nach Anspruch 1, wobei das Verhältnis eines Abstands der Statorelektrodenanordnung (106) zu einem Abstand der Translatorelektrodenanordnung (108) derart angegeben ist, dass jedes der zwei Ausgangssignale (116) sinusförmig ist.

5. Beschleunigungsmesser nach Anspruch 1, wobei das Verhältnis eines Abstands der Statorelektrodenanordnung (106) zu einem Abstand zwischen der Statorelektrodenanordnung (106) und der Translatorelektrodenanordnung (108) derart angegeben ist, dass Maxima und Minima der zwei Ausgangssignale (116) gleichmäßig über einen Bereich der Prüfmassenverschiebung verteilt sind.

6. Beschleunigungsmesser nach einem der Ansprüche 1 bis 5, wobei die Antriebsspannung eine Sinuswelle ist.

7. Beschleunigungsmesser nach einem der Ansprüche 1 bis 5, wobei die Antriebsspannung eine Rechteckwelle ist.

8. Beschleunigungsmesser nach Anspruch 1, wobei die Antriebsschaltung (114) eine Antriebssteuerung (118) zur Steuerung einer Amplitude der Antriebsspannungen beeinhaltet.

**9.** Verfahren zur Feststellung der Beschleunigung mithilfe eines kapazitiven Beschleunigungsmessers, das Folgendes umfasst:

Anlegen einer Vielzahl von Antriebsspannungen an die Kapazitanzen $C_{aA}$, $C_{bA}$, $C_{aB}$, $C_{bB}$, $C_{ac}$ und $A_{bc}$, die von Statorelektroden auf einer Stützstruktur (104) und Translatorelektroden auf einer Prüfmasse (102) gebildet sind, um zwei Ausgangssignale (116) zu erzeugen, wobei die durch die Antriebsspannungen auf die Prüfmasse (102) ausgeübte Gesamtkraft F konstant bei ungefähr null gehalten wird,
wobei eine Antriebsspannung $V_A$ an die Kapazitanzen $C_{aA}$ und $C_{bA}$, eine Antriebsspannung $V_B$ an die Kapazitanzen $C_{aB}$ und $C_{bB}$ und eine Antriebsspannung $V_C$ an die Kapazitanzen $C_{ac}$ und $C_{bc}$ angelegt wird, sodass

$$F = -\frac{1}{2}[V_A^2 C_1 + V_B^2 C_2 + V_C^2 C_3]$$

wobei

$$C_1 = \left(\frac{\partial C_{aA}}{\partial x} + \frac{\partial C_{bA}}{\partial x}\right)$$

$$C_2 = \left(\frac{\partial C_{aB}}{\partial x} + \frac{\partial C_{bB}}{\partial x}\right)$$

$$C_3 = \left(\frac{\partial C_{ac}}{\partial x} + \frac{\partial C_{bc}}{\partial x}\right)$$

und wobei x die Verschiebung der Prüfmasse (102) bezogen auf die Stützstruktur (114) ist.

**10.** Verfahren nach Anspruch 9, wobei die Antriebsspannung eine Sinus- oder Rechteckwelle ist.

**Revendications**

**1.** Accéléromètre (100), comprenant :

une structure de support (104) sur laquelle se trouve un réseau d'électrodes de stator (106) comprenant une électrode de stator (A), une électrode de stator (B) et une électrode de stator (C) ;
une masse étalon (102) positionnée parallèlement au réseau d'électrodes de stator et pouvant être déplacée dans une direction parallèle au réseau d'électrodes de stator, et sur laquelle se trouve un réseau d'électrodes de translation (108) en face du réseau d'électrodes de stator et comprenant une électrode de translation a et une électrode de translation b, dans lequel les électrodes de stator et les électrodes de translation forment des capacités $C_{aA}$, $C_{bA}$, $C_{aB}$, $C_{bB}$, $C_{ac}$ et $C_{bc}$ ; et
des circuits d'entraînement (114) pour appliquer une pluralité de tensions de commande aux capacités afin de générer deux signaux de sortie (116), dans lequel la force totale F exercée sur la masse étalon (102) par les tensions de commande est maintenue constante à environ zéro,
dans lequel les circuits d'entraînement (114) appliquent une tension de commande VA aux capacités $C_{aA}$ et $C_{bA}$, une tension de commande $V_B$ aux capacités $C_{aB}$ et $C_{bB}$, et une tension de commande $V_c$, aux capacités $C_{ac}$ et $C_{bc}$, de sorte que

$$F = -\frac{1}{2}[V_A^2 C_1 + V_B^2 C_2 + V_C^2 C_3]$$

où

$$C_1 = \left( \frac{\partial C_{aA}}{\partial x} + \frac{\partial C_{bA}}{\partial x} \right)$$

$$C_2 = \left( \frac{\partial C_{aB}}{\partial x} + \frac{\partial C_{bB}}{\partial x} \right)$$

$$C_3 = \left( \frac{\partial C_{aC}}{\partial x} + \frac{\partial C_{bC}}{\partial x} \right)$$

et où x est le déplacement de la masse étalon (102) par rapport à la structure de support (104).

2. Accéléromètre selon la revendication 1, dans lequel les circuits d'entraînement appliquent les tensions de commande aux capacités de sorte qu'un différentiel de tension entre les deux signaux de sortie (116) soit constant à environ zéro lorsque le déplacement de la masse étalon (102) est nul.

3. Accéléromètre selon la revendication 1, dans lequel les circuits d'entraînement (114) appliquent les tensions de commande afin de maximiser $\partial V_0 / \partial x$, où $V_0$ est un différentiel de tension entre les deux signaux de sortie (116).

4. Accéléromètre selon la revendication 1, dans lequel un rapport entre un pas du réseau d'électrodes de stator (106) et un pas du réseau d'électrodes de translation (108) est spécifié de sorte que chacun des deux signaux de sortie (116) soit sinusoidal.

5. Accéléromètre selon la revendication 1, dans lequel un rapport entre un pas du réseau d'électrodes de stator (106) et une distance entre le réseau d'électrodes de stator (106) et le réseau d'électrodes de translation (108) est spécifié de sorte que des valeurs maximales et minimales des deux signaux de sortie (116) soient uniformément réparties sur une plage de déplacement de masse étalon.

6. Accéléromètre selon l'une quelconque des revendications 1 à 5, dans lequel la tension de commande est une onde sinusoïdale.

7. Accéléromètre selon l'une quelconque des revendications 1 à 5, dans lequel la tension de commande est une onde carrée.

8. Accéléromètre selon la revendication 1, dans lequel les circuits d'entraînement (114) comprennent un contrôleur d'entraînement (118) pour contrôler une amplitude des tensions de commande.

9. Procédé de détection d'une accélération en utilisant un accéléromètre capacitif, comprenant l'étape suivante :

appliquer une pluralité de tensions de commande aux capacités $C_{aA}$, $C_{bA}$, $C_{aB}$, $C_{bB}$, $C_{ac}$ et $C_{bc}$ formées par des électrodes de stator sur une structure de support (104) et des électrodes de translation sur une masse étalon (102) afin de générer deux signaux de sortie (116), dans lequel la force totale F exercée sur la masse étalon (102) par les tensions de commande est maintenue constante à environ zéro,
dans lequel une tension de commande VA est appliquée aux capacités $C_{aA}$ et $C_{bA}$, une tension de commande $V_B$ est appliquée aux capacités $C_{aB}$ et $C_{bB}$ et une tension de commande $V_c$ est appliquée aux capacités $C_{ac}$ et $C_{bc}$, de sorte que

$$F = -\frac{1}{2} \left[ V_A^2 C_1 + V_B^2 C_2 + V_C^2 C_3 \right]$$

où

$$C_1 = \left( \frac{\partial C_{aA}}{\partial x} + \frac{\partial C_{bA}}{\partial x} \right)$$

$$C_2 = \left( \frac{\partial C_{aB}}{\partial x} + \frac{\partial C_{bB}}{\partial x} \right)$$

$$C_3 = \left( \frac{\partial C_{aC}}{\partial x} + \frac{\partial C_{bC}}{\partial x} \right)$$

et où x est le déplacement de la masse étalon (102) par rapport à la structure de support (114).

**10.** Procédé selon la revendication 9, dans lequel la tension de commande est une onde sinusoïdale ou une onde carrée.

**FIG. 1**

**FIG. 2**

**FIG. 3**

**FIG. 4**

**FIG. 5**

**FIG. 6**

**FIG. 7**

**EP 2 569 643 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080178674 A